# EUROPEAN PATENT SPECIFICATION

(11) **EP 2 647 608 B1**
(45) Date of publication and mention of the grant of the patent: **08.08.2018**
(21) Application number: 11844332.4
(22) Date of filing: 01.12.2011
(51) Int. Cl.: C09D 1/08, C04B 18/24, C04B 28/02, C04B 14/02, C09D 5/16, C09D 7/12

(54) **COMPOUND MATERIAL BASED ON RICE HUSK AND BINDER, MODIFIED WITH CARBON NANOTUBES**
VERBUNDWERKSTOFF AUF BASIS VON REISHÜLSEN UND EINEM MIT KOHLENSTOFFNANORÖHRCHEN MODIFIZIERTEN BINDEMITTEL
MATIÈRE COMPOSÉE À BASE D'ÉCORCE DE RIZ ET DE LIANT MODIFIÉ AVEC DES NANOTUBES DE CARBONE

(30) Priority: 01.12.2010 MX 2010001321
(43) Date of publication of application: 09.10.2013
(73) Proprietor: Urbanizaciones Inmobiliarias Del Centro, S. A. De C.V., CP. 76160 Querétaro (MX)
(72) Inventor: SOTO MONTOYA, José Antonio, Querétaro 76905 (MX); MARTINEZ ALANIS, Mauricio, Querétaro 76190 (MX); RAMIREZ GONZALEZ, Daniel, San Luis Potosí 78150 (MX)
(74) Representative: Hörschler, Wolfram Johannes
(86) International application number: PCT/MX2011/000147
(87) International publication number: WO 2012/074350

(56) References cited:
- EP-A2- 1 659 158
- WO-A1-02/06182
- WO-A1-2009/099640
- CN-A- 101 239 801
- DE-A1-102007 013 467
- US-B1- 7 666 327
- KONSTA-GDOUTOS M S ET AL: "Multi-scale mechanical and fracture characteristics and early-age strain capacity of high performance carbon nanotube/cement nanocomposites", CEMENT AND CONCRETE COMPOSITES, ELSEVIER APPLIED SCIENCE, BARKING, GB, vol. 32, no. 2, 1 February 2010 (2010-02-01), pages 110-115, XP026823846, ISSN: 0958-9465 [retrieved on 2009-10-27]
- DATABASE WPI Week201065, Derwent Publications Ltd., London, GB; AN 2010-L27752, XP008170568 & CN 101 798 466 A (LONGHAI NAITE CHEMICAL INDUSTRY CO LTD) 11 August 2010
- CHAIPANICH ARNON ET AL: "Compressive strength and microstructure of carbon nanotubes-fly ash cement compos", MATERIALS SCIENCE AND ENGINEERING: A, vol. 527, no. 4, 27 September 2009 (2009-09-27), pages 1063-1067, XP028714860, ISSN: 0921-5093, DOI: 10.1016/J.MSEA.2009.09.039

## Description

### FIELD OF THE INVENTION

The present invention refers to material made of rice husk and binder, and more particularly to a material composed of rice husk with polymeric resin binders modified with multiple-layer carbon nanotubes.

### BACKGROUND OF THE INVENTION

Rice is a food that is consumed in the entire earth and within its processing, it is necessary to remove the husk. Particularly, for each ton of collected rice a fourth of ton of rice husks is produced, which it is mostly treated as agricultural residue,

Only in Mexico 337,250 tons of rice are produced yearly, which represents 84,312 tons of rice husks per year.

Due to the worldwide high production of rice, it is important to find applications of residue (husk), produced during its processing. Its high content of silica, its uniform thickness geometry and aspect relation, make it a material that is economically viable to work as load (filling material) in resin binder, similar to wood particles used in the manufacture of conglomerates. Within the manufacturing process of wood binders, the resin proportion used orders the mechanical resistance of the end product. That is, the greater the resin concentration, the greater mechanical resistance, but obviously greater production cost. From the nanostructure point of view, the carbon nanotubes, besides other properties, are highly resistant and can cause significant increase on the mechanical properties of a material, if employed as support nanoload.

On the other hand, it is also known that the housing market is a significant inexpensive motor in any country and Mexico is not the exception. The composition of a building destined for housing is very complex, it requires a great number of materials and labor from an assortment of specialties, equally from the construction process chosen therefor. However, all these constructions have similar features regarding shape and behavior. All of them are composed of walls, and one horizontal defined by systems of floor and covers.

WO 02/06182 A1 is related to a mortar composition and method. A mortar composition comprises 100 parts of weight by cement; 1-80 parts by weight of untreated rice husks; 30-200 parts by weight of one or more fillers and additives; and to 0.2-10 parts by weight of an accelerator. The mortar composition is settable and methods for making the mortar composition are provided.

US 7,666,327 B1 is related to a multifunctional cementitious nanocomposite material and method of making the same. A high performance multifunctional cementitious nanocomposite material is made by adding a nano admixture to the water used in a conventional cementitious material manufacturing process. The nano admixture is made by dispersing nanomaterials in a solvent and sonicating the mixture, adding a hydrophilic emulsifier, thickener, additive or cellulose derived compound to hot water, where is separates and expands, cooling the water, causing the compound to dissolve. Then the solvent and nanomaterial mixture is added to the water and mechanically mixed. The contact between the nanomaterials and the surrounding matrix changes with applied stress, affecting the volume electrical response of the finished nanocomposite material. By measuring the electrical resistance of the material, its structural health, as well as the stress applied to it, can be monitored. A bridge is made with the material as monitored for structural integrity and for the weight, speed, and location of traffic over the bridge.
WO 2009/099640 A1 is related to highly-dispersed carbon nanotube-reinforced cement-based materials. Composit cement material is prepared from cement material and carbon nanotubes, wherein the carbon nanotubes are present from 0.02 wt% to about 0.10 wt% based on weight cement material. The process for preparing such cement compositions includes sonicating a mixture of a surfactant, water, and carbon nanotubes; and blending the dispersion and the cement material to form a cementitious paste. The process may also include curing the cementitious paste. The composite cement materials are useful in a variety of cement applications where a reduction in nanoscale flaws and fractures is desired.
From the publication of Chaipanich, Arnon et al "Compressive strength and microstructure of carbon nanotubes-fly ash cement composites", Materials Science and Engineering A, Vol 521, No. 4, pages 1063 - 1067, XP 28714860, ISSN: 0921-5093, doi: 10.1016/j.msea.2009.09.039 it is known, to add carbon nanotubes of 0,5 and 1% by weight in a fly ash cementsystem to produce carbon nanotubes-fly ash composites in the form of pastes and mortars. Compressive strength of the composites were then investigated. It was found that the use of carbon nanotubes resulted in higher strength of fly-ash mortars. The highest strength obtained for 20% fly ash cement mortars was found at 1% carbon nanotubes where the compressive strength at 28 days was 51.8 MPa. This benefit can clearly be seen in fly ash cement with fly ash of 20% where the importance of the addition of carbon nanotubes means that the relative strength to that of Portland cement became almost 100% at 28 days.

We have noticed that wood and its conglomerates can be used within a full constructive system, from structure to finishes. Notwithstanding, the ecological part and the cost from the distinct processes for treating the same can be very high, and negatively affect the generation of inexpensive housing, even when panels made of process residues and synthetic resin binding particles are generated.

Within this problem, the idea arises of manufacturing cheaper products with better performance combining four elements (agroindustrial residue materials, polymeric resins, cements and carbon nanostructures). On one hand, it has been shown that it is possible to mix resins with carbon nanotubes in order to achieve a better mechanical and driving performance. Furthermore, the rice husk (with or without thermal treatment) can become an inexpensive material because it is a waste, and thus it can be used to manufacture more inexpensive composite materials (conglomerates, pastes and paints) employing a carbon nanotube modified resin and a cement material (white cement and Portland gray cement). These new compounds are conceived as construction materials, which are parts of the construction system due to its mechanical properties or well as materials for finishes allowing building low cost housings.

The material of the present invention has advanced nanotechnology engineering, in addition to having as base element an agricultural field residue produced in every region of the world and its application as fodder is not possible, thus it is considered as having significant ecological contributions.

The silica oxide present in the husk and which is part of the composed material for construction, does not represent any health risk since the silica is confined in the rice husk structure and the latter one is in turn inside the material polymeric matrix, eliminating the risk of detachment from said particles that may cause harm to people who make contact with the same,

By offering fireproof properties, the material of the present invention is considered an appropriate finish for places of massive concentration of people as fire-retardant, and this give added value to housings where it is applied.

Since its constituents give it the property of not transmitting heat surrounding its side exposed to the outside (for having a micro scale porous structure and high silica content) it also passively participates in saving electric energy to achieve comfort inside the building to which it is applied, we have found that the performance of a 3mm thick paste is significantly superior than that corresponding to a 2 inch thick polystyrene plate.

Likewise, the composed material of the invention is made up of ecological materials and has the ability of being a wood substitute material for building houses, its contribution to the environment reaches an elevated impact since it stops using materials that for its manufacture high volumes of CO₂ are indirectly obtained.

In the present invention in addition, we propose the mixing and pressing procedure of a cementing material with rice husk with or without thermal treatment, bound with carbon nanotube modified polymeric resin as support load. The procedure allows that when varying the proportions between these materials a conglomerate, paste or paint may be produced, in order to incorporate it as a substitute and novel material in the existing construction systems.

Briefly, the rice husk material of the present invention, can be used in the preparation of:
Paint, with fireproof properties, great mechanical resistance, and thermal and impermeable insulation properties;
Paste, to directly apply on walls as texturized finish, with thermal isolating properties with thickness of 2 mm or more, fireproof properties and with mechanical resistance to stress and impermeable; and
Panel, in different thicknesses and densities, with high bending, tension and compression mechanical properties, fireproof and thermal isolating, in addition to being resistant to constant hydrostatic pressures (with no thickness increase) for a long time and for its silica content also resistant to thermites, it also presents thermo-modeling properties.

### BRIEF DESCRIPTION OF DRAWINGS

In order to understand better the invention, a description of the same is provided below, along with the accompanying drawings, in which:
Figure 1 shows a diagram of the process for the synthesis of carbon nanostructures, employing aerosol-assisted chemical vapor deposition (AACVD);
Figure 2 shows an electronic scanning microscope image of carbon nanotubes used in the present invention;
Figure 3 illustrates a high-resolution transmitting electronic microscope image (with a graphic scale of 500nm), revealing the carbon nanotubes internal structure used in the present invention;
Figure 4 illustrates a high-resolution transmitting electronic microscope image, revealing the carbon nanotube internal structure and crystallinity to greater resolution (with a graphic scale of 5nm) that the image of figure 3;
Figure 5 shows the X-ray pattern of the nanotubes used in the present invention;
Figure 6 shows a mass revolution graph in relation to the temperature in the thermogravimetric analysis of the nanotubes used in the present invention;
Figure 7 shows the diffractogram typical of white cement;
Figure 8 shows a rice husk micrograph with a graphic scale of 3 mm;
Figure 9 shows a rice husk micrograph with a graphic scale of 500 µm;
Figure 10 shows a rice husk micrograph with a graphic scale of 200 µm;
Figure 11 shows a rice husk micrograph with a graphic scale of 50 µm;
Figure 12 shows a micrograph of the rice husk internal structure with a graphic scale of 200 µm;
Figure 13 shows a micrograph of the rice husk internal structure with a graphic scale of 50 µm;
Figure 14 is an image showing a spectrum with the signals associated with the chemical elements present in the rice husk surface;
Figure 15 is an image showing an analysis region of the rice husk surface;
Figures 16, 17, and 18 are part of a mapping of more plentiful chemical elements in the rice husk;
Figure 19 is a concept diagram showing the components of the composed material of the present invention;
Figure 20 is a scheme of the simultaneous ultrasound dispersion process;
Figure 21 is a scheme result of the ultrasound dispersion of the means carbon nanotubes;
Figure 22 is an image showing the carbon nanotubes after ultrasound dispersion with a graphic scale of 2 µm;
Figure 23 is an image of the raw binder;
Figure 24 is an image of the binder reinforced with carbon nanotubes;
Figure 25 shows an image of the compound including husk, cement, resin and a homogeneous dispersion of the carbon nanotubes; and
Figure 26 is a comparative graph of mean temperature in the devices coated with polystyrene of 2 inches thick, against another one coated with paste of 3 mm thick and with the outside temperature as reference.

### DETAILED DESCRIPTION OF THE INVENTION

The loads employed for modifying the binder, are multiple wall carbon nanotubes, which are almost cylindrical structures, composed of several graphite network concentric layers (hexagonal network of carbon atoms covalently linked to each other). It should be emphasized that the carbon-carbon link is one of the most resistant ones existing in nature. However, some of the carbon atoms of the hexagonal networks can be replaced with other functional elements or groups making these tubes be more reactive with molecules, polymers and external agents, and that their interactions with different matrixes are higher. Within the groups or elements that can replace carbon atoms, N, P, O, S, Si, B, Se, etc., can be mentioned, or rather the functionalization with -OH, -OOH or OH-type groups.

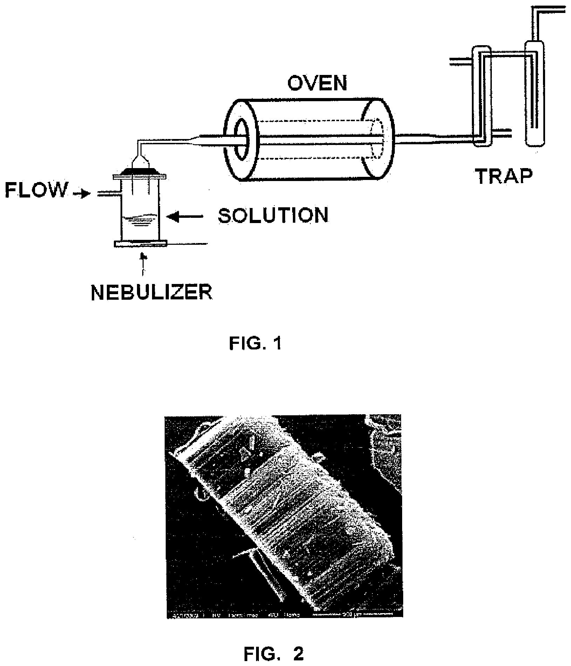

The dimensions of the multiple layer carbon nanotubes, employed in this work have average lengths of 800 µm and diameters of 30-70 nm, and were synthesized with the AACVD (Aerosol Assisted Chemical Vapor Deposition) method, which employs a solution containing the carbon source (for example, hydrocarbon) and a metallic catalyst used for promoting the growth of tubular nanostructures (for example, transition metals such as Ni, Fe, and Co). This solution is stirred with ultrasound in order to generate microbeads of this mixture (Fig. 1), and by means of the inert gas flow is transported through a quartz pipe to the high temperature reactors where its decomposition and subsequent growth of the nanotubes occurs.

Other important aspects of the nanotubes produced in the present invention are:
Reactivity, caused by the controlled presence of atoms other than carbon (doping) or by functional groups, which allows a better interaction between the carbon nanotube and the matrix in question to manufacture the compound with nanotubes;
High crystallinity degree of the nanotubes;
High purity of nanotubes (absence of non-tubular particles and amorphous carbons).

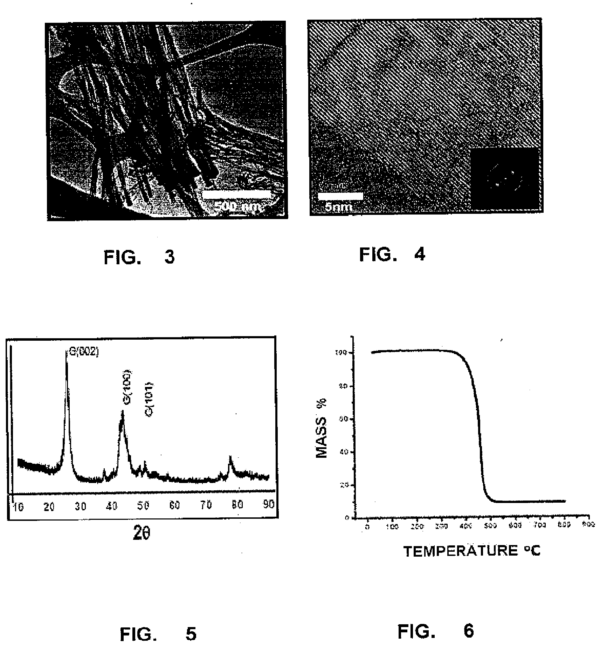

In figures 2 and 3, corresponding to electronic scanning microscope images, it can be noticed the purity of the nanostructures and their morphology. In figure 4, corresponding to a high-resolution transmitting electronic microscope image, the internal structure and crystallinity are revealed, as well as the diameters. In figure 5, the crystallinity of the nanotubes can be confirmed. In figure 6, the absence of amorphous material is confirmed, as well as purity, since it shows the mass evolution in relation to the temperature in thermal gravimetric analysis in the air.

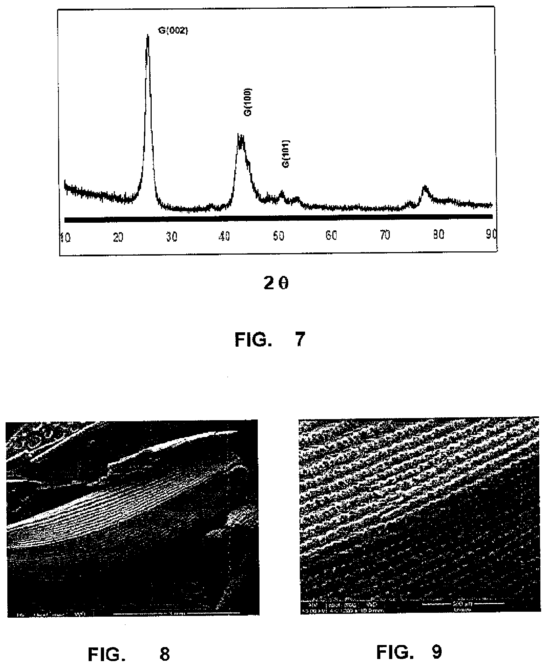

Another loading element in the synthesis of the material composed of rice husk, is the use of white cement, such being a variant of the Portland cement, but with a lower percentage of Fe₂O₃. Its aspects regarding mechanical resistance are similar to the gray cement, but with a lower forge time, that is, is more reactive and thus requires more moisture percentage. In figure 7, a typical diffractogram of white cement is shown.

The role of white cement is to interact along with the modified binder, as an additional binding element in the material, thus providing a better performance in highly humid environments, as well as a greater integration in surfaces relative to concrete and to speed up the drying process of the material.

The invention takes advantage of the mechanical properties of the doped and functionalized carbon nanotubes, in order to significantly increase the mechanical properties of one compound that is used in manufacturing rice husk conglomerates, paints, pastes or panels in the construction field.

The key point of the present invention, centers on the interaction of active sites in the carbon nanotubes surface (doping), and takes advantage of the aspect ration (length/diameter) of these nanotubes (between 30,000 and 50,000).

The base component for producing the composed material is the rice husk, which is a by-product of agroindustrial activities, and which cannot be used as forage, in addition to being a substitute of base materials of cellulose and other natural fibers.

For the characterization or morphological and chemical analysis of the materials used in this invention, electronic scanning microscope studies and elemental analysis were carried out using X-ray energy dispersion, as it is shown in figures 8-18. In the micrographs of figures 8-11, it can be generally noticed the surface of whole husks presented in a regular pattern of periodic "pyramidal" periodic arrays, the base mean size is 40 µm² and with a regular separation between them of approximately 80 µm, which favor linking point with the modified resin.

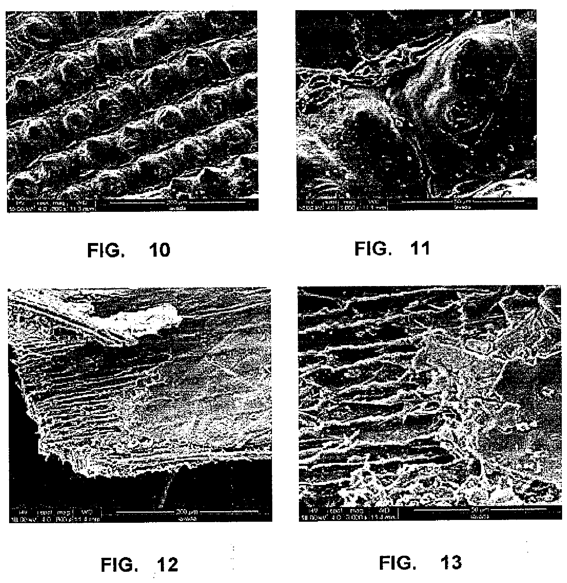

In figures 12 and 13, the internal structure is observed, constituted by parallel channels throughout the body. The channel diameter is closer to 10 µm.

In the table below the elemental quantification is shown, presented in weight percentage and atomic percentage, this reveals that SiO2 composes more than 50% of the rice husk.

| Element | Wt% | At% |
|---|---|---|
| C K | 28.49 | 39.53 |
| O K | 40.21 | 41.89 |
| Si K | 31.31 | 18.58 |

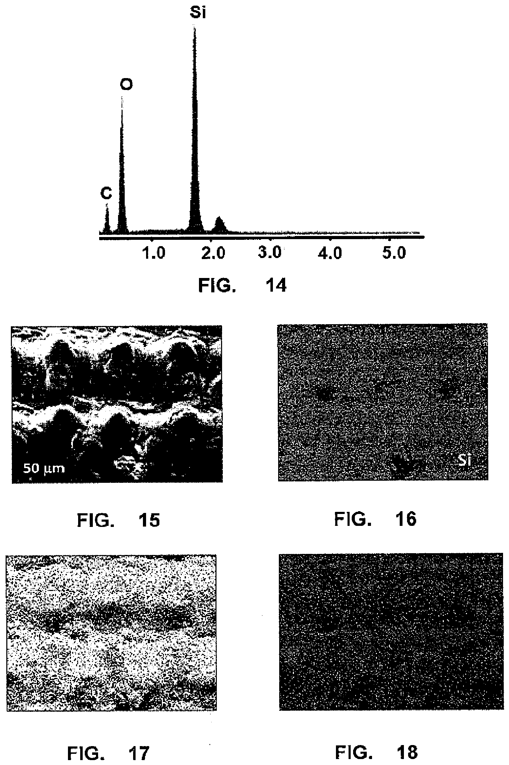

In figure 14 the spectrum is shown with signs of the elements found in the surface of the rice husk.

In figures 15 to 18, the elemental mapping analysis is shown of a random region in the rice husk surface. In figure 15 the analysis region is shown, while for each one of the images of figures 16 to 18 it is generated from the punctual energy detection matrix for Si, O, and C.

The combination of the properties of each one of the blocks makes space for obtaining a material composed of special features translated in a better mechanical and driving performance as the conventional materials.

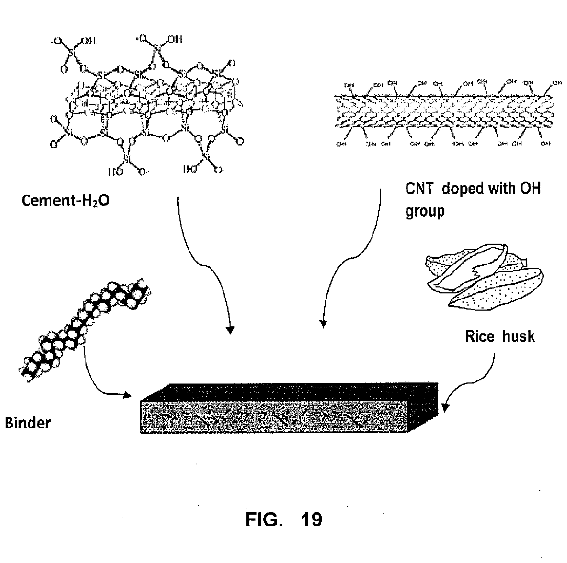

In figure 19 the concept about the nanostructured composed material of the present invention is represented, whose properties offer a better performance than similar natural fiber-based materials and a poor environmental impact compared to the elaboration of similar synthetic fiber-based materials. Said composed material is constituted by cement, water, doped carbon nanostructures with N, P, O, S, Si, B, Se, Fe, Co, Ni, Ag, Au, Pd, Pt, etc., or well functionalization with -OH, -OOH or OH-type groups, thermally or acidly treated to cause defects in its graphite network, rice husk and the binder or polymeric resin.

The elaboration process of the material of the present invention starts with mechanical grinding of the rice husk to achieve a size between 100nm up to 2mm.

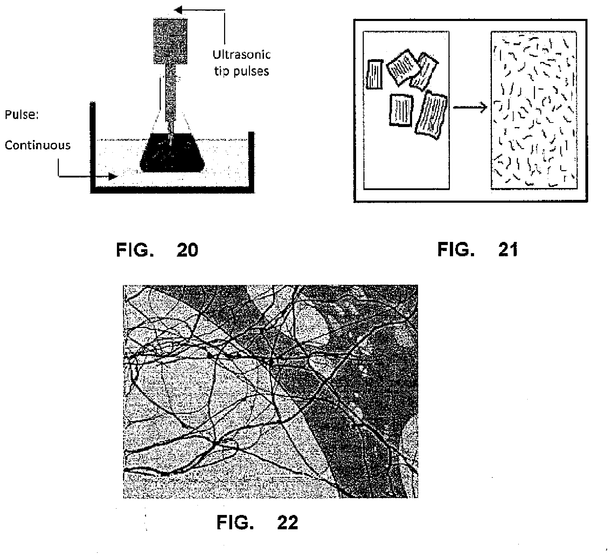

On the other hand, the process for modifying the binder was as follows:
Dispersion of the carbon nanotubes through an ultrasound dispersion process, with one end or one coat (see figure 20). Figure 21 shows on the left side the binder and the carbon nanotubes before the dispersion and on the right side it shows the dispersion result. The dispersion can also be seen in the image of figure 22.

The nanostructures are subsequently incorporated (previously dispersed) in the binding matrix at a controlled temperature, using the electro-mechanical blender to obtain a better distribution of the nanometric loads in the matrix. Load percentages of carbon nanostructures were used from 0.001% up to 10% by weight, in relation to the binder.

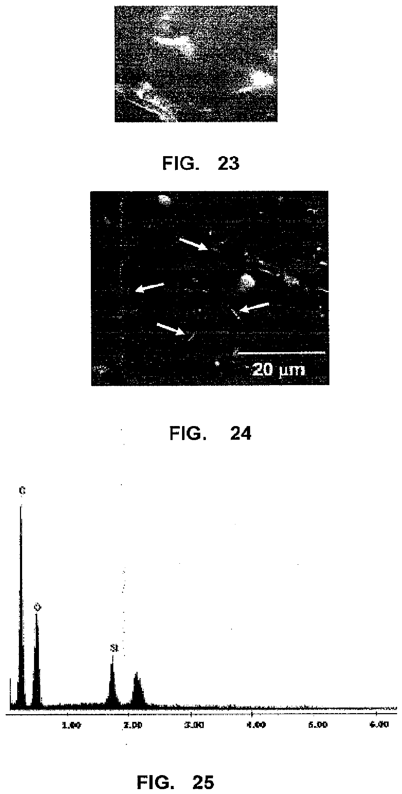

The binding matrix is of polymeric type, for example, the polyvinyl acetate or the like. In figures 23 and 24 a difference can be noted between one pure resin and one resin modified with carbon nanostructures (see arrows indicating the carbon nanotube dispersion), respectively.

Figure 25 shows the X-ray energy dispersion spectrum wherein it is determined that the main constituents of the composed material are the following:

| Element | Wt% | At% |
|---|---|---|
| C K | 64.3 | 71.89 |
| O K | 30.55 | 25.65 |
| Si K | 5.15 | 2.46 |

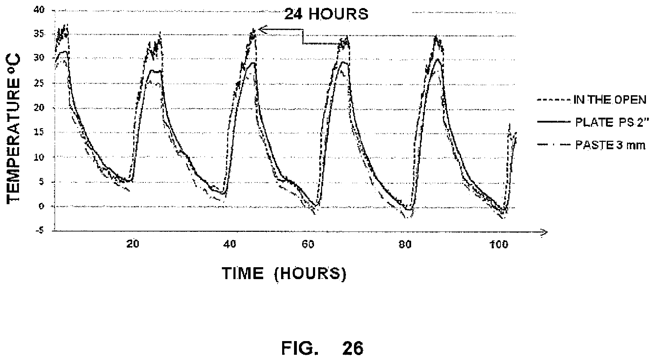

In figure 26 it can be noticed that the material of the present invention has a better performance when comparing it to a 2 inch polymeric polystyrene plate, the graph shows that there are at least 4°C of difference between the internal temperature from the measurement device exposed to the outside coating with 3mm of paste from the material of this invention, and another 2 inch thick polystyrene coating, both well below the measured outside temperature right on the side of the used devices.

The main purpose of incorporating carbon nanostructures, is to increase the resin or binder performance, through which they will transfer their mechanical, electrical and thermal properties during the polymerization, having as a result a support network in the binding polymer with better properties.

Generally, the procedure for preparing the material of the present invention is as follows:
1. Mixing processed rice husk with modified resin;
2. Measuring out the white cement load; and
3. Homogenizing the previous mixture with electromechanical means.

The variations in percentages of the materials to achieve different formulations of the compound are as follows (the percentages refer to the processed husk mass [m]):
Conglomerate: processed husk (m); white cement (20% to 80%m); modified resin with nanostructure load (1% to 150%m); water (0% to 10%m); pressure 1 to 40 kg/cm²; temperature 18 to 150°C,

Regarding the preparation of the paste the proportions are: processed husk (m); white cement (20% to 80%m); resin modified with nanostructure load (100% to 300%m); water (10% to 50%m); pressure 0 kg/cm²; temperature 18 to 25°C.

In regards to the preparation of the paint the proportions are: processed husk (m); white cement (20% to 80%); resin modified with nanostructure load (>200% m); water (50% to 150%m); pressure 0 kg/cm²; temperature 18 to 25°C.

The main difference between the three presentations is the amount relative to each one of their components, water, resin modified with carbon nanostructures, rice husk, white cement, pressure and temperature, since the manufacturing process is similar for all.

The material composed in its distinct presentations was submitted to hydrostatic pressure tests during a period of time higher than 40 hours, without recording permeability,

The material composed in its distinct presentations was submitted to direct flame fuel tests, showing fireproof properties, properties that do not show conventional wood products (three-ply, boards, commercial binders, etc.).

The paste-type composed material was used to coat a clear material cube, and it was placed outside next to a similar coating with 2 inch polystyrene plates during more than 100 continuous hours, recording the interior temperature of the devices and comparing it to that one registered from the outside, an ability of thermal isolation is observed significantly higher than the one of the 2-inch polystyrene when the paste is painted white (see figure 26).

The conglomerate-type composed material was submitted to a bending mechanical test to 3 points, determining the increase percentage in the performance of the material test tubes of the invention in relation to those of reference, and it was concluded that the use of carbon nanostructures as support in the resin, as well as the use of white cement, is translated into a 54% increase in bending mechanical resistance.

## Claims

1. A composed material comprising rice husk with or without thermal treatment, binder modified with multiple-layer carbon nanotubes, water, and cement, the binder being one polymeric resin.

2. The material in accordance to claim1, wherein the polymeric resin is polyvinyl acetate.

3. Use of the composed material according to claims 1 or 2 in the preparation of a compressed conglomerate.

4. Use of the composed material according to claims 1 or 2 in the preparation of a paint for surfaces.

5. Use of the composed material according to claims 1or 2 in the preparation of a paste for coating surfaces

## Patentansprüche

1. Ein zusammen gesetztes Material, umfassend Reisspreu mit oder ohne thermische Behandlung, Binder modifiziert mit mehrschichtigen Kohlenstoffnanoröhrchen, Wasser, und Zement, wobei der Binder ein polymeres Harz ist.

2. Das Material nach Anspruch 1, wobei das polymere Harz Polyvinyl Azetat ist.

3. Verwendung des zusammen gesetzten Materials gemäß Ansprüchen 1 oder 2 in der Zubereitung eines komprimierten Konglomerats.

4. Verwendung des zusammen gesetzten Materials gemäß Ansprüchen 1 oder 2 in der Zubereitung einer Farbe für Oberflächen.

5. Verwendung des zusammen gesetzten Materials gemäß Ansprüchen 1 oder 2 in der Zubereitung einer Paste zum Beschichten von Oberflächen.

## Revendications

1. Matière composée comprenant de l'écorce de riz avec ou sans traitement thermique, un liant modifié avec des nanotubes de carbone multicouches, de l'eau et du ciment, le liant étant une résine polymère.

2. Matière selon la revendication 1, dans laquelle la résine polymère est de l'acétate de polyvinyle.

3. Utilisation de la matière composée selon les revendications 1 ou 2, pour la préparation d'un conglomérat comprimé.

4. Utilisation de la matière composée selon les revendications 1 ou 2, pour la préparation d'une peinture pour des surfaces.

5. Utilisation de la matière composée selon les revendications 1 ou 2, pour la préparation d'une pâte pour revêtir des surfaces.
